# EUROPEAN PATENT APPLICATION

(11) **EP 1 990 932 A1**
(43) Date of publication of application: **12.11.2008**
(21) Application number: 07737381.9
(22) Date of filing: 26.02.2007
(51) Int. Cl.: H04B 7/15, H04B 7/08, H04B 7/26

(54) **RADIO COMMUNICATION DEVICE AND RELAY TRANSMISSION METHOD**

(30) Priority: 27.02.2006 JP 2006051174
(71) Applicant: MATSUSHITA ELECTRIC INDUSTRIAL CO., LTD., Osaka 571-8501 (JP)
(72) Inventor: HORIUCHI, Ayako Matsushita Electric Industrial Co., Ltd., 2-1-61, Shiromi, Chuo-ku Osaka 540-6207 (JP); MIYOSHI, Kenichi Matsushita Electric Industrial Co., Ltd., 2-1-61, Shiromi, Chuo-ku Osaka 540-6207 (JP); IMAMURA, Daichi Matsushita Electric Industrial Co., Ltd., 2-1-61, Shiromi, Chuo-ku Osaka 540-6207 (JP); MORINO, Hiroaki Shibaura Institute of Technology, Tokyo 135-8548 (JP)
(74) Representative: Grünecker, Kinkeldey, Stockmair & Schwanhäusser Anwaltssozietät
(86) International application number: PCT/JP2007/053529
(87) International publication number: WO 2007/097449

(57) **Abstract**

A relay transmission method for communication between a base station and a mobile station via a relay station while producing a diversity effect even if the relay station detects an error in the relay signal. A decoding section (104) of the relay station used in this method performserror-correction decoding of a systematic bit by using a parity bit by repetition decoding such as turbo decoding and acquires the results of the decoding composed of the systematic bit having undergone the error-correction decoding. An error judging section (105) judges whether or not any error is present in the decoding results. Coding section (106) performs error-correction coding of the decoding results and acquires the error-correction coded systematic bit and paritybit. A selecting section (107) selects either the decoding results inputted from the decoding section (104) or a bit sequence inputted from the coding section (106) according to the result of the judgment by the error judging section (105) and outputs the selected one to a modulating section (108). A transmission control section (112) controls the operation of a radio transmitting section (109) according to the SNR of the received data symbol and the result of the judgment by the error judging section (105).

## Description

### Technical Field

The present invention relates to a radio communication station apparatus and relay transmission method.

### Background Art

In recent years, with the multimediatization of information in cellular mobile communication systems as represented by mobile phones for example, transmitting large capacity data such as still images and movies in addition to speech data becomes popular in recent years8.2 technology in which a high-frequency radio band is used to obtain a high transmission rate is studied actively.

However, when a high-frequency radio band is used, although a high transmission rate can be expected in a short distance, attenuation due to transmission distance becomes greater as the distance increases. Accordingly, when the mobile communication system employing a high-frequency radio band is actually operated, the coverage area of each radio communication base station apparatuses (hereinafter "base station") becomes small, which thus requires that a larger number of base stations be set up. Since the set-up of base stations involves large costs, a technology is strongly demanded for realizing communication services which employ a high-frequency radio band and preventing an increase in the number of base stations.

To address this demand, various relay technologies are investigated in which radio communication relay station apparatuses (hereinafter "relay stations") are set up between a radio communication mobile station apparatus (hereinafter "mobile station") and a base station, and communication between the mobile station and the base station is carried out via these relay stations.

Moreover, as one of relay technologies, communication between a base station and a mobile station is carried out via a plurality of relay stations simultaneously. The technology enables to obtain diversity effect by performing relay transmission in cooperation of a plurality of relay stations and by receiving signals from a plurality of relay stations by a base station and a mobile station of signal receiving side.

Moreover, a relay technology is disclosed that, to prevent propagation of errors in relay-transmission, the relay station detects errors in a relay signal and does not relay the signals having errors (see non-patent document 1). Non-patent Document 1: "Cooperative Relaying Technique with Space Time Block Code for Multihop Communications among Single Antenna Terminals," technical report of IEICE, The Institute of Electronics, Information and Communication Engineers, March 2004, A·P2003-342, RCS2003-365, pp.71 to 76

### Disclosure of Invention

### Problems to be Solved by the Invention

However, according to the relay technology disclosed in non-patent document 1, signals having errors are not relay-transmitted to the base station or the mobile station of the signal receiving side, and so, although propagation of errors can be prevented, diversity effect cannot be obtained in the base station or the mobile station.

It is therefore an obj ect of the present invention to provide a radio communication station apparatus and relay transmission method that can obtain diversity effect even when a relay station detects error in a relay signal.

### Means for Solving the Problem

The radio communication apparatus of the present invention is a radio communication apparatus that performs relay transmission between a first radio communication apparatus and a second radio communication apparatus and adopts a configuration including: a receiving section that receives a first data symbol formed with first systematic bits and first parity bits subjected to error correcting encoding, from the first radio communication apparatus; a demodulating section that demodulates the first data symbol to acquire the first systematic bits and the first parity bits; a decoding section that performs error correcting decoding on the first systematic bits using the first parity bits to acquire a decoding result formed with the second systematic bits after the error correcting decoding; a determining section that determines whether or not there are errors in the decoding result; a measuring section that measures a first channel quality of the first data symbol; and a control section that controls whether or not to transmit a second data symbol including the second systematic bits according to the first channel quality when there are errors in the decoding result.

### Advantageous Effect of the Invention

The present invention provides an advantage of obtaining diversity effect even when a relay station detects errors in a relay signal.

### Brief Description of Drawings

FIG.1 is a configuration diagram of the mobile communication system according to the embodiments;
FIG.2 is a block diagram showing a configuration of the relay station according to Embodiment 1;
FIG.3 illustrates received data symbols according to Embodiment 1;
FIG.4 illustrates a decoding result according to Embodiment 1 (modulation scheme: 16QAM);
FIG.5 illustrates a bit sequence after encoding according to Embodiment 1;
FIG.6 is an example of threshold settings according to Embodiment 1;
FIG.7 illustrates a decoding result according to Embodiment 1 (modulation scheme: QPSK);
FIG.8 is a block diagram showing a configuration of the base station according to Embodiment 1;
FIG.9 is a sequence diagram according to Embodiment 1;
FIG.10 is a block diagram showing a configuration of the relay station according to Embodiment 2;
FIG.11 is an example of assigning the flags according to Embodiment 2;
FIG.12 is a block diagram showing a configuration of the relay station according to Embodiment 3 of the present invention;
FIG.13 is a bit sequence after the combination according to Embodiments 3 and 4;
FIG.14 is a block diagram showing a configuration of the relay station according to Embodiment 4;
FIG.15 is a block diagram showing a configuration of the relay station according to Embodiment 5;
FIG.16 is a block diagram showing a configuration of the base station according to Embodiment 5;
FIG. 17 is an example of assigning the flags according to Embodiment 5; and
FIG. 18 is a sequence diagram according to Embodiment 5.

### Best Mode for Carrying Out the Invention

Now, embodiments of the present invention will be described in detail with reference to the accompanying drawings. The radio communication apparatus that will be explained below includes relaying a signal transmitted from a first radio communication apparatus to a second radio communication apparatus, and, for example, is mounted in a relay station used in mobile communication systems. In the following embodiments, the radio communication apparatus that relays signals will be described as a "relay station," the first radio communication apparatus will be described as a "mobile station," and the second radio communication apparatus will be described as a "base station."

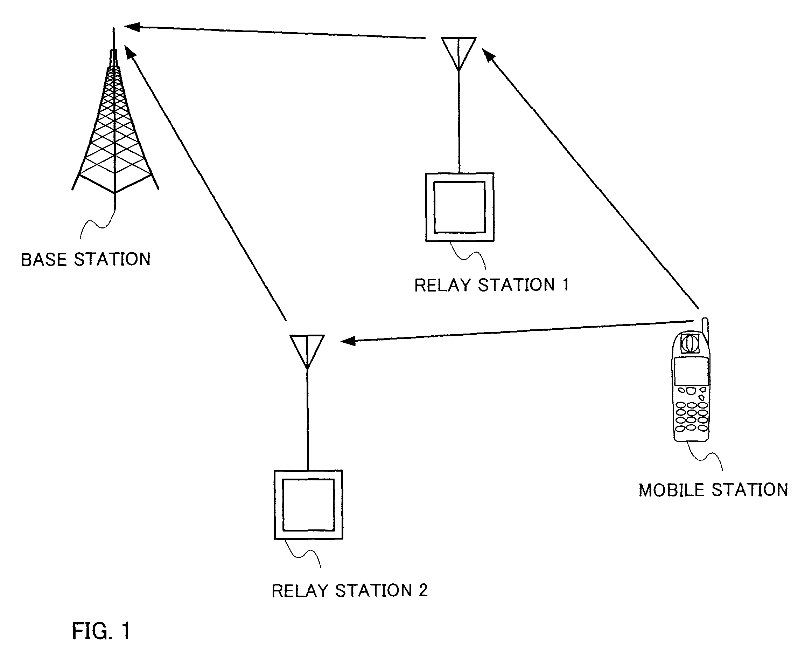

Moreover, in the mobile communication system according to the embodiments below, as shown in FIG.1, there are a plurality of relay stations (relay station 1 and relay station 2) that relay transmission signals from mobile station to the base station. Furthermore, a plurality of such relay stations relay signals in cooperation. The mobile station, the relay station and the base station synchronically transmit and receive signals having a predetermined duration in frame units.

Moreover, in the mobile communication system, the mobile station performs error correcting encoding on transmission data (bit sequence) using systematic codes including turbo code. By error correcting encoding on the transmission bit sequence using systematic codes, the mobile station encodes the transmission bit sequence into systematic bits, which are transmission bits themselves, and parity bits, which are redundancy bits. Accordingly, data symbols transmitted from the mobile station to the relay station are formed with systematic bits and parity bits subjected to error correcting encoding. After the relay station receives and demodulates these data symbols, the relay station performs error correcting decoding on the systematic bits using the parity bits through iterative decoding including turbo decoding and acquires systematic bits after error correcting decoding.

The relay station according to the embodiments below may be set in advance, and other mobile stations may be used for the relay stations like the ad-hoc network (e.g. see Japanese Patent Application Laid-Open No. 2001-189971).

### (Embodiment 1)

In iterative decoding such as turbo decoding, the reliability of determinations is improved and error rate performances are improved by decoding iteratively using reliability information of a decoding result (e.g. likelihood information). Accordingly, if iterative decoding is used in error correcting decoding, even when there are bits with errors in a decoding result, the number of such bits is small and the decoding result is likely to be virtually correct. That is, if iterative decoding is used in error correcting decoding, even when errors are detected in decoding result through CRC (Cyclic Redundancy Check) and so on, only part of the systematic bits with errors is included in the decoding result, and so it is likely that most of the systematic bits are correct. Accordingly, this decoding result is set in a relay transmission target even when there are errors, so that the base station can obtain diversity effect for systematic bits. Moreover, due to diversity effect, the base station can adequately correct the errors upon error correcting decoding, so that it is possible to prevent propagation of errors.

On the other hand, if channel quality of the data symbols which the relay station receives from the mobile station is low, it is anticipated that the number of systematic bits with errors increases in systematic bits included in a decoding result. In a case where there are a large number of systematic bits with errors in the decoding result as such, if the relay station transmits data symbols generated from the decoding result to the base station, propagation of errors cannot be prevented and error performances degrade.

Moreover, if errors are detected in the decoding result, the error rate of the decoding result tends to be lower if channel quality of the received data symbols is higher. Accordingly, the decoding result where errors are detected when channel quality of the received data symbols is high is more likely to be close to correct.

Then, the relay station of the present embodiment controls whether or not to transmit data symbols including systematic bits, according to channel quality of received data symbols when there are errors in a decoding result formed with systematic bits after error correcting decoding.

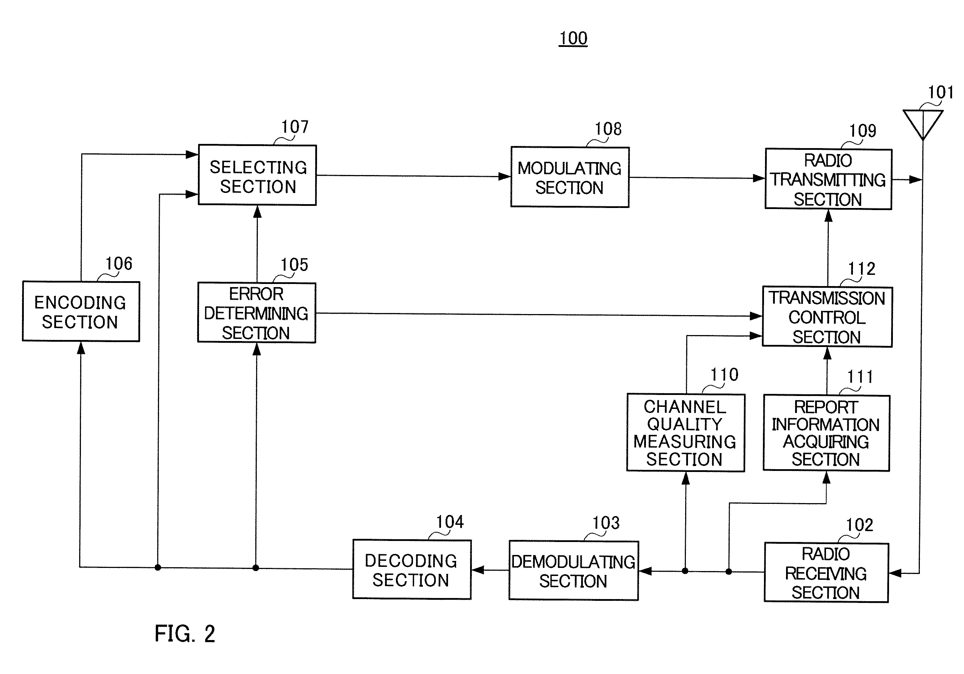

FIG.2 shows the configuration of relay station 100 of the present embodiment. Above-described relay station 1 and relay station 2 have the same configurations. The following explanation will be limited to uplink relay-transmission, but downlink relay-transmissionmay be carried out as uplink relay-transmission.

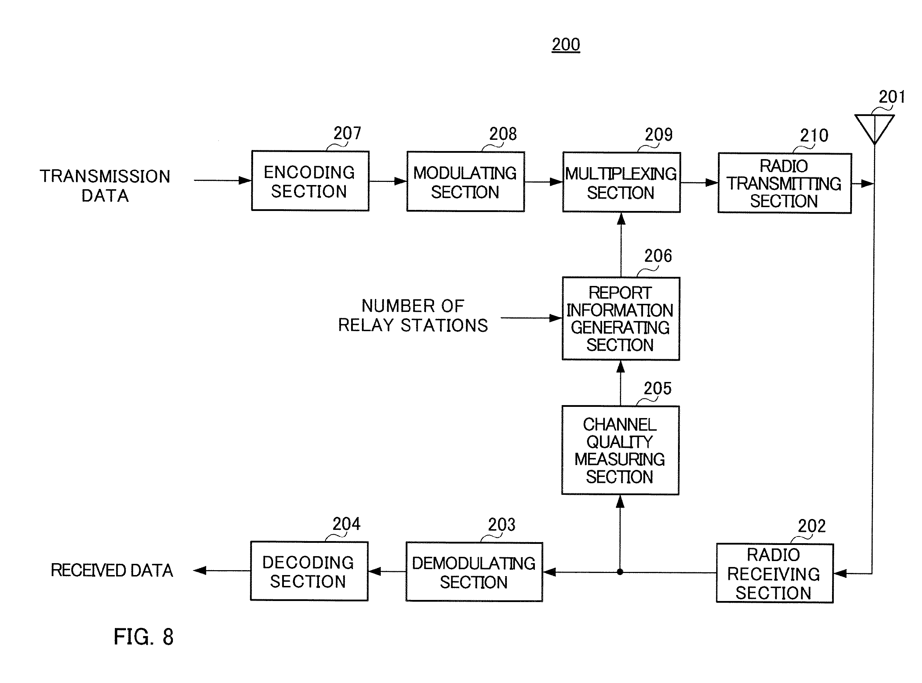

In relay station 100, radio receiving section 102 receives data symbols transmitted from the mobile station and report information transmitted from base station 200 (described later) shown in FIG.8 via antenna 101, performs radio processing including down-conversion and outputs the data symbols and the report information after radio processing to demodulating section 103, channel quality measuring section 110 and report information acquiring section 111.

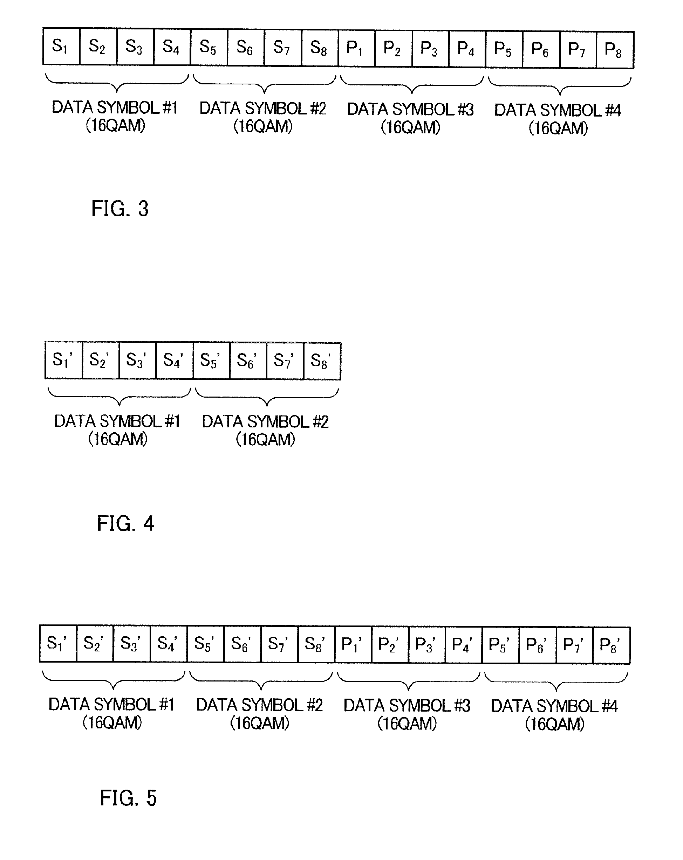

FIG.3 shows data symbols #1 to #4 received in radio receiving section 102. As shown in this figure, received data symbols #1 to #4 are formed with systematic bits (S) and parity bits (P) subjected to error correcting encoding. Here, the coding rate R for error correcting encoding in the mobile station is 1/2. That is, the ratio between systematic bits and parity bits is 1:1. Additionally, here, 16 QAM is used as modulation scheme in the mobile station.

Demodulating section 103 demodulates received data symbols #1 to #4, to acquire systematic bits S₁ to S₈ and parity bits P₁ to P₈, and outputs the systematic bits and parity bits to decoding section 104.

Decoding section 104 performs error correcting decoding on the systematic bits using the parity bits through iterative decoding including turbo decoding, to acquire a decoding result formed with the systematic bits after error correcting decoding. Decoding section 104 performs error correcting decoding on systematic bits S₁ to S₈ using parity bits P₁ to P₈, and, as shown in FIG.4, acquires the decoding result formed with systematic bits S₁' to S₈' after error correcting decoding. Then, decoding section 104 outputs this decoding result to error determining section 105, encoding section 106 and selecting section 107.

Error determining section 105 determines whether or not there are errors in the decoding result using CRC. That is, error determining section 105 determines whether or not there are systematic bits S₁' to S₈' with errors. Then, error determining section 105 outputs the determination result (i.e. "NG" when there are errors and "OK" when there are no errors) to selecting section 107 and transmission control section 112. Whether or not there are errors is usually determined on a per frame basis.

Encoding section 106 performs error correcting encoding on the decoding result to acquire systematic bits and parity bits subjected to error correcting encoding. Encoding section 106 performs error correcting encoding on the decoding result using systematic codes including turbo encoding. The coding rate R here is 1/2 is the same as the coding rate in the mobile station. That is, as shown in FIG.5, error correcting encoding in encoding section 106 produces acquiring systematic bits S₁' to S₈', which are the decoding result itself, and parity bits P₁' to P₈', which are new redundancy bits. Then, encoding section 106 outputs this bit sequence to selecting section 107.

According to the determination result in error determining section 105, selecting section 107 selects either the decoding result (FIG.4) inputted from decoding section 104 or the bit sequence (FIG.5) inputted from encoding section 106 and outputs the selected result to modulating section 108.

Here, error detection using CRC usually can determine whether or not there are errors in a decoding result, but is unable to detect bits with errors in the decoding result or the number of bits with errors. Accordingly, even when it is determined that there are errors in the decoding result by error determining section 105, as described above, only part of systematic bits S₁' to S₈' has errors, and it is likelymost of the systematic bits are without errors.

Then, if there are errors in the decoding result (FIG.4) in decoding section 104 (if the error determination result is "NG"), selecting section 107 selects the decoding result and outputs it to modulating section 108. That is, if there are errors in the decoding result in decoding section 104, as shown in FIG.4, modulating section 108 generates data symbols #1 and #2 formed with systematic bits S₁' to S₈' by modulating the decoding result and outputs the data symbols to radio transmitting section 109. 16QAM is used as a modulation scheme here as in the mobile station.

On the other hand, if there are no errors in the decoding result (FIG.4) in decoding section 104 (if the error determination result is "OK"), selecting section 107 selects the bit sequence (FIG.5) inputted from encoding section 106 and outputs it to modulating section 108. That is, if there are no errors in the decoding result in decoding section 104, as shown in FIG.5, modulating section 108 generates data symbols #1 to #4 formed with systematic bits S₁' to S₈' and parity bits P₁' to P₈' by modulating the bit sequence and outputs the generated data symbols to radio transmitting section 109. 16QAM is used here as the modulation scheme as described above.

Radio transmitting section 109 operating under control of transmission control section 112 performs radio processing including up-conversion on the data symbols inputted from modulating section 108 and transmits the data symbols after radio processing to the base station via antenna 101.

Here, in the mobile communication system shown in FIG.1, there are cases where there are errors in the decoding result in relay station 1 but there are no errors in the decoding result in relay station 2. In this case, modulating section 108 modulates the systematic bits and the parity bits separately as shown in FIG.5 so as to combine easily the systematic bits from relay station 1 and the systematic bits from relay station 2 in the base station. This modulation enables relay station 1 and relay station 2 to transmit the data symbols formed with the same systematic bits (FIGs.4 and 5) to the base station at the same timing, so that the base station can easily combine the data symbols formed with the same systematicbits. When the channels between relay station 1 and the base station and between relay station 2 and the base station can be demultiplexed, it is not particularly necessary to transmit the data symbols formed with the same systematic bits from relay station 1 and relay station 2 at the same timing.

The reason that relay station 100 transmits the parity bits generated by error correcting encoding in encoding section 106 to the base station only when there are no errors in the decoding result in decoding section 104 is that, when there are errors in the decoding result in decoding section 104, the reliability of the parity bits acquired from the decoding result is very low.

Channel quality measuring section 110 measures the channel quality of the received data symbols, that is, the channel quality between the mobile station and relay station 100, and outputs the measured result to transmission control section 112. Channel quality measuring section 110 measures channel quality using , for example, SIR, SNR, SINR, CIR, CNR, CINR, RSSI, received intensity, received power, interference power, error rate, transmission rate, throughput, the amount of interference, channel fluctuation, moving speed of the mobile station and MCS that achieves a predetermined error rate. Here, channel quality measuring section 110 measures the SNR of the received data symbols as channel quality and outputs it to transmission control section 112. Channel quality is also referred to as received quality, CQI (Channel Quality Information), CSI (Channel State Information) and so on.

Report information acquiring section 111 acquires the report information from base station 200 and outputs the report information to transmission control section 112. This report information includes the number of relay stations 100 (hereinafter simply "the number of relay stations") that perform relay transmission between the mobile station and base station 200, and the channel quality (SNR here) between relay station 100 and base station 200. As shown in FIG.1, when relay station 1 and relay station 2 relay a signal from the mobile station to the base station in cooperation, the number of relay stations is "2." Moreover, in this way, it is anticipated that there are a plurality of relay stations 100 that perform relay transmission between the mobile station and base station 200, and this plurality of relay stations 100 perform relay transmission in corporation, so that the SNR included in this report information is an average of the SNRs (average SNR) of a plurality of data symbols received from a plurality of relay stations 100.

Transmission control section 112 controls the operations of radio transmitting section 109 according to the SNR of the received data symbols and the determination result in error determining section 105.

When there are no errors in the decoding result (FIG.4) in decoding section 104, transmission control section 112 determines to transmit data symbols #1 to #4 (FIG.5) formed with systematic bits S₁' to S₈' and parity bits P₁' to P₈' regardless of the SNR of the received data symbols and starts radio transmitting section 109. Accordingly, in this case, radio transmitting section 109 transmits data symbols #1 to #4 formed with systematic bits S₁' to S₈' and parity bits P₁' to P₈'.

On the other hand, when there are errors in the decoding result (FIG.4) in decoding section 104, transmission control section 112 compares the SNR of the received data symbols and a threshold.

Then, if the SNR of the received data symbols is equal to or more than the threshold, transmission control section 112 determines to transmit the data symbols (FIG.4) formed with systematic bits S₁' to S₈' alone and starts radio transmitting section 109. Accordingly, in this case, radio transmitting section 109 transmits the data symbols formed with systematic bits S₁' to S₈' alone.

On the other hand, if the SNR of the received data symbols is lower than the threshold, transmission control section 112 determines not to transmit the data symbols (FIG.4) formed with systematic bits S₁' to S₈' alone and stop the operations of radio transmitting section 109. Accordingly, in this case, radio transmitting section 109 does not transmit the data symbols formed with systematic bits S₁' to S₈' alone.

In this way, when there are errors in the decoding result (FIG.4) in decoding section 104, transmission control section 112 controls whether or not to transmit data symbols formed with systematic bits S₁' to S₈' alone according to the SNR of the received data symbols.

Next, the setting method of the above explained threshold will be explained.

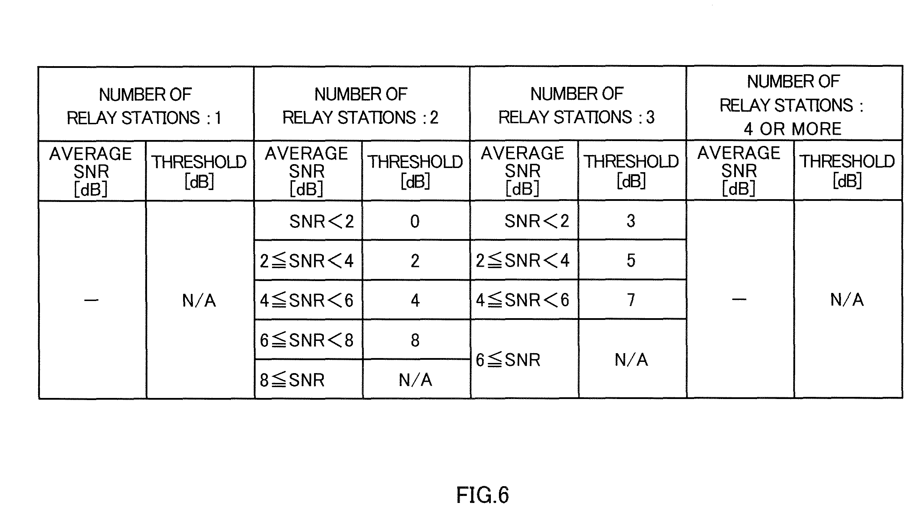

Transmission control section 112 sets the threshold according to report information. That is, transmission control section 112 sets the threshold according to the number of relay stations and the average SNR. Transmission control section 112 sets a higher threshold when the number of relay stations increases. Moreover, transmission control section 112 sets a higher threshold when the average SNR increases. To be more specific, the threshold is set as shown in FIG.6.

First, if the focus is placed upon cases where the number of relay stations is "2" and "3," given the same average SNR, the higher threshold is set in a case where the number of relay stations is "3" than a case where the number of relay station is "2." For example, when 2 ≦ SNR < 4, the threshold is set "2" when the number of relay stations is "2," and the threshold is set"5" when the number of relay stations is "3." Moreover, in both cases where number of relay stations is "2" and "3," the higher threshold is set when the average SNR increases. This means that diversity effect in the base station becomes greater when the number of relay stations increases and the average SNR increases, and the base station can acquire error rate performances of interest easily, and so relay station 100 does not have to transmit data symbols including systematic bits with errors.

Moreover, in a case where the number of relay stations is "2," the threshold is not set when the SNR is equal to or more than "8," and in a case where the number of relay station is "3," the threshold is not set when the SNR is equal to or more than "6." When the threshold is not set as such, transmission control section 112 stops the operation of radio transmitting section 109 as in a case where the SNR of the received data symbols is less than the threshold. When the number of relay stations is equal to or more than "4," the threshold is not set regardless of the average SNR for the same reason described above.

Moreover, when the number of relay stations is "1," the threshold is not set either regardless of the average SNR. This is because, when the number of relay stations is "1," even when relay station 100 transmits the data symbols including systematic bits with errors to the base station, no other relay station 100 relays data symbols to the base station, and so the base station cannot obtain diversity effect.

The threshold setting method above has been explained in transmission control section 112.

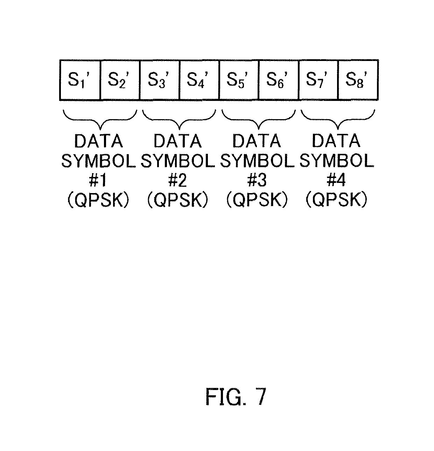

Moreover, with the present embodiment, modulating section 108 may set the modulation level in the decoding result with errors in decoding section 104 lower than the modulation level in the decoding result without errors in decoding section 104. For example, when the modulation scheme without errors is 16QAM as described above, the modulation scheme with errors is QPSK as shown in FIG.7. This is to reduce the error rate of systematic bits having errors between the relay station and the base station by reducing modulation level using bands allocated for the parity bits, given that the parity bits are not transmitted when there are errors in the decoding result in decoding section 104.

Next, base station 200 of the present embodiment will be explained. FIG.8 shows the configuration of base station 200.

In base station 200, radio receiving section 202 receives data symbols transmitted from relay station 100 via antenna 201, performs radio processing including down-conversion and outputs the data symbols after radio processing to demodulating section 203 and channel quality measuring section 205.

Demodulating section 203 demodulates the received data symbols and outputs the demodulated data symbols to decoding section 204.

Decoding section 204 performs error correcting decoding on the bit sequence after demodulation and acquires received data.

Channel quality measuring section 205 measures the channel quality of the received data symbols, that is, the channel quality between the relay stations 100 and base station 200 and outputs the measured result to report information generating section 206. Here, channel quality measuring section 205 measures the SNR of the received data symbols as channel quality. Moreover, as described above, it is anticipated that there are a plurality of relay stations 100 that perform relay transmission between the mobile station and base station 200, and this plurality of relay stations 100 perform relay transmission in corporation, so that channel quality measuring section 205 finds an average of SNRs (average SNR) of a plurality of data symbols received from a plurality of relay stations 100 and outputs the average SNR to report information generating section 206.

Report information generating section 206 generates report information formed with the average SNR and the number of relay stations, and outputs the generated report information to multiplexing section 209. This number of relay stations may be reported from a radio channel control station apparatus (hereinafter simply "control station") that connects with base station 200 on wireline and controls base station 200 in upper layers in base station 200.

Encoding section 207 encodes transmission data and outputs the encoded transmission data to modulating section 208.

Modulating section 208 modulates the encoded bit sequence to generate data symbols, and outputs the generated data symbols to multiplexing section 209.

Multiplexing section 209 time-multiplexes the data symbols and the report information and outputs them to radio transmitting section 210.

Radio transmitting section 210 performs radio processing including up-conversion on the data symbols and the report information and outputs them to relay station 100 via antenna 201.

Base station 200 may include the individual SNRs of a plurality of relay stations 100 in report information and transmit the report information to relay stations 100, and relay station 100 each find an average (average SNR) of a plurality of SNRs.

Moreover, when base station 200 includes the individual SNRs of a plurality of relay stations 100 in report information and transmits the report information to relay stations 100, transmission control section 112 in each relay station 100 finds a sum of the SNRs of the other relay stations 100 (sum of the SNRs of the other relay stations) and set a threshold according to the sum of the SNRs of other relay stations. Moreover, when base station 200 finds a sum of the SNRs of a plurality of relay stations 100, includes the sum of the SNRs in report information and transmits the report information to relay stations 100, each relay station 100 may find the sum of SNRs of the other stations by subtracting its SNR from the sum of the SNRs of a plurality of relay stations 100. In any case, for the reasons described above, transmission control section 112 sets a higher threshold when the sum of the SNRs of the other stations increases.

Moreover, when base station 200 includes the individual SNRs of a plurality of relay stations 100 in report information and transmits the report information to relay stations 100, transmission control section 112 in relay station 100 may acquire the SNR of the relay station from a plurality of the SNRs and set a threshold according to the SNR of relay station 100. The error rate decreases when the SNR of the relay station increases. Conversely, the error rate increases when the SNR of the relay station is lower in the propagation path between relay station 100 and base station 200, so that transmission control section 112 sets a higher threshold when the SNR of relay station 100 becomes lower. Base station 200 may report to relay stations 100 their individual SNRs. Moreover, in the TDD (Time Division Duplex) system where uplink and downlink propagation conditions are similar, relay station 100 may set the threshold according to the SNR of a downlink signal received from base station 200.

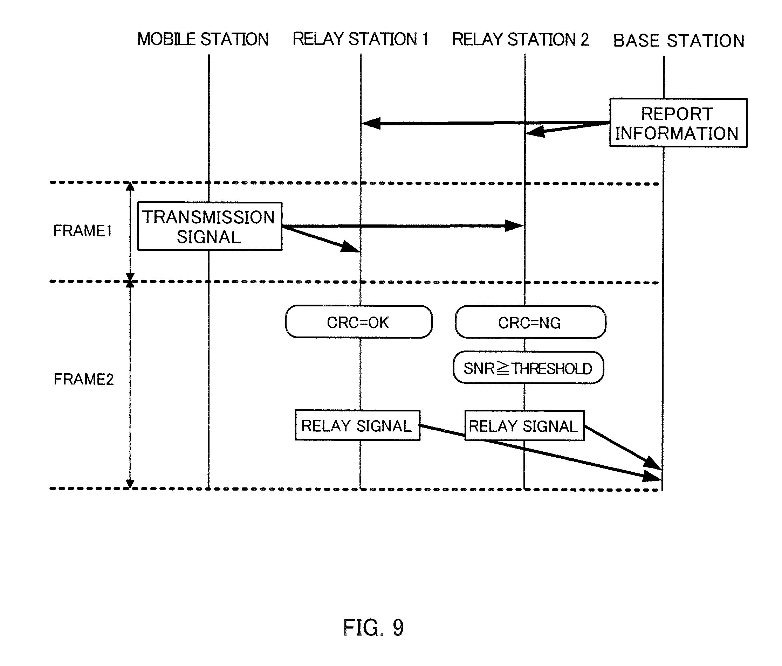

Next, FIG.9 shows a sequence diagram of a case where there are no errors in the decoding result in relay station 1 and there are errors in the decoding result in relay station 2. Relay station 1 and relay station 2 adopt the configuration shown in FIG.2, and the base station adopts the configuration shown in FIG.8.

First, the base station transmits normal information to relay station 1 and relay station 2 in advance.

In frame 1, the mobile station transmits the transmission signal for the base station to relay station 1 and relay station 2 simultaneously.

In frame 2, there are no errors in the decoding result (CRC = OK), so that relay station 1 transmits the relay signal shown in FIG.5 to the base station. Meanwhile, there are errors in the decoding result (CRC = NG), so that relay station 2 compares the SNR of the received data symbols and the threshold. Then, the SNR is equal to or more than the threshold, so that relay station 2 transmits the relay signal shown in FIG.4 to the base station. Then, the base station receives the relay signal from relay station 1 and the relay signal from relay station 2, and combines the data symbols formed with the same systematic bits between the relay stations.

In this way, according to the present embodiment, it is possible to prevent propagation of errors that is likely to occur when channel quality of received data symbols is low, and obtain diversity effect in the base station.

### (Embodiment 2)

The relay station according to the present embodiment transmits information showing whether or not the data symbol includes systematic bits with errors, to the base station.

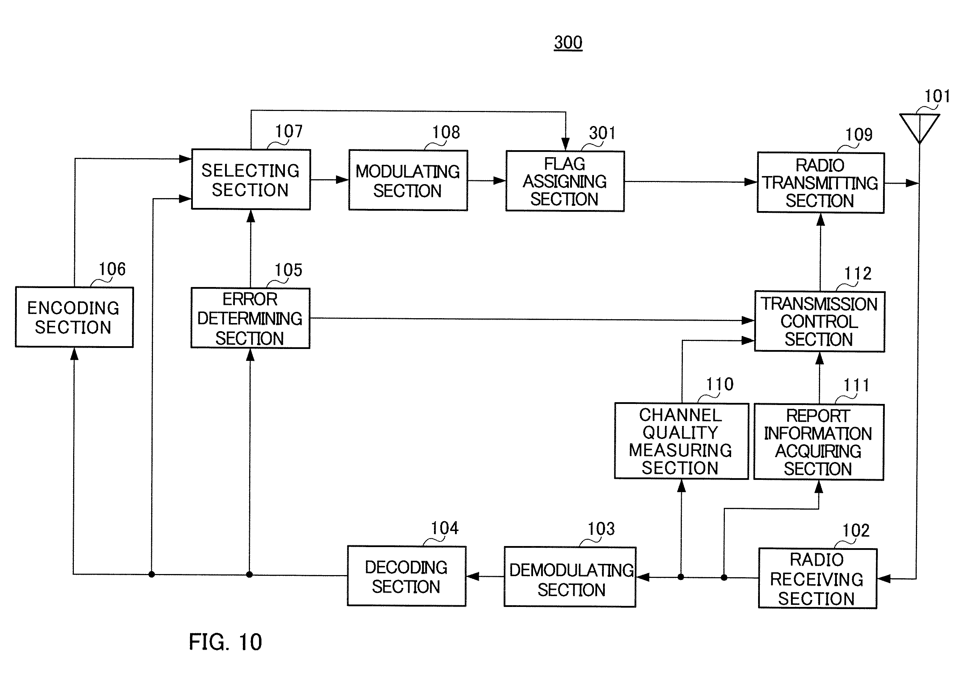

FIG.10 shows the configuration of relay station 300 according to the present embodiment. In FIG.10, the same components as Embodiment 1 (FIG.2) will be assigned the same reference numerals and description thereof will be omitted.

Selecting section 107 outputs the selection result to flag assigning section 301. Moreover, modulating section 108 outputs the data symbol to flag assigning section 301.

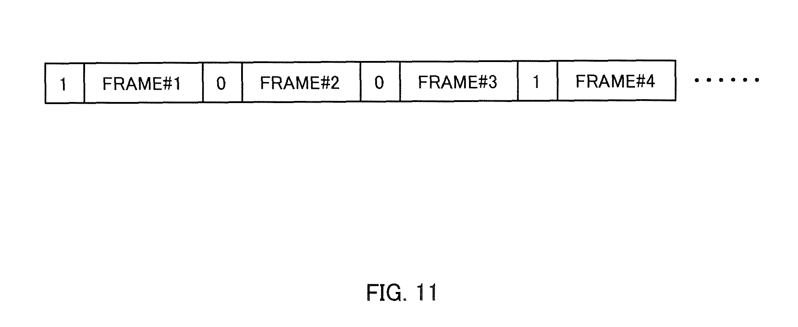

Flag assigning section 301 assigns information showing whether or not the data symbol includes systematic bits with errors, to the data symbol according to the selection result in selecting section 107, and outputs the data symbol with the information to radio transmitting section 109. For example, flag assigning section 301, as shown in FIG.11, assigns the flag "1" to the beginning of frames #1 and #4 formed with the data symbols including the systematic bits with errors and assigns the flag "0" to the beginning of frames #2 and #3 formed with the data symbols not including the systematic bits with errors.

By this means, it is possible to distinguish data symbols including systematic bits with errors from data symbols not including systematic bits with errors easily in the base station.

### (Embodiment 3)

Even there are errors in the decoding result (FIG.4) in decoding section 104, the reliability of parity bits P₁ to P₈ included in the received data symbols (FIG.3) may be high.

Then, when there are errors in the decoding result formed with systematic bits after error correcting decoding, the relay station of the present embodiment is the same as Embodiment 1 in transmitting data symbols including systematic bits to the base station, and is different from Embodiment 1 in including parity bits after a hard decision into the data symbols.

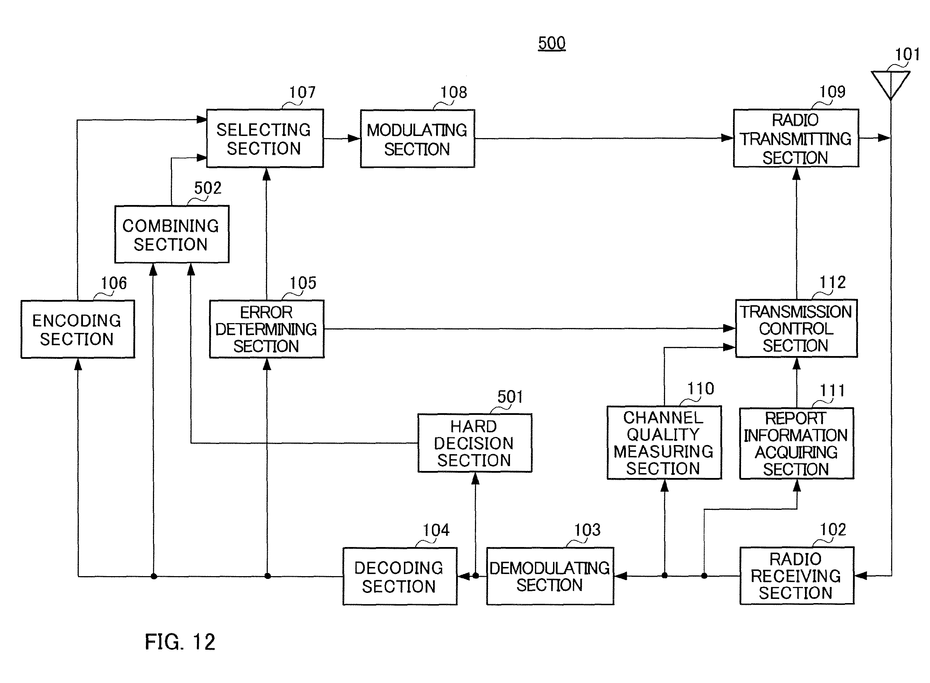

FIG.12 shows the configuration of relay station 500 according to the present embodiment. In FIG.12, the same components as Embodiment 1 (FIG.2) will be assigned the same reference numerals and description thereof will be omitted.

Systematic bits S₁ to S₈ and parity bits P₁ to P₈ acquired in demodulating section 103 are inputted to decoding section 104 and hard decision section 501.

Hard decision section 501 makes a hard decision on parity bits P₁ to P₈ and acquires parity bits P₁'' to P₈''. Then, hard decision section 501 outputs the parity bit sequence after hard decision to combining section 502.

The decoding result (FIG.4) acquired in decoding section 104 is inputted to error determining section 105, encoding section 106 and combining section 502.

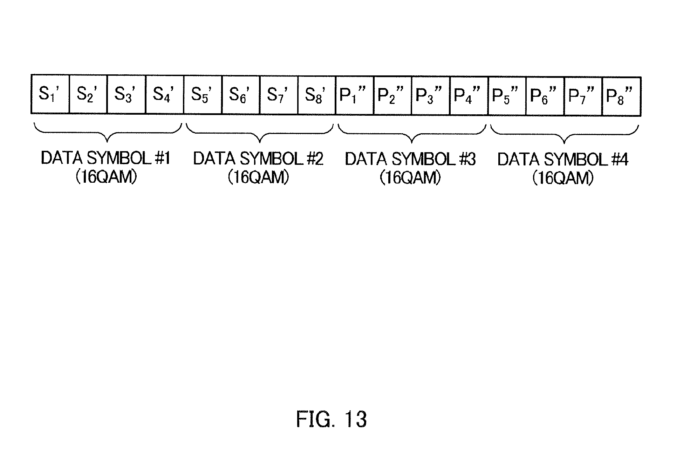

Combining section 502 combines the bit sequence inputted from hard decision section 501 and the bit sequence inputted in parallel from decoding section 104 as shown in FIG.13 and outputs the combined bit sequence to selecting section 107.

According to the determination result in error determining section 105, selecting section 107 selects either the bit sequence (FIG.13) inputted from combining section 502 or bit sequence (FIG. 5) inputted from encoding section 106 and outputs the selected bit sequence to modulating section 108.

The operations of selecting section 107 when there are no errors in the decoding result (FIG.4) in decoding section 104 will be the same as in Embodiment 1 and description thereof will be omitted.

On the other hand, when there are errors in the decoding result in decoding section 104, selecting section 107 selects the bit sequence (FIG.13) inputted from combining section 502 and outputs the selected bit sequence to modulating section 108. That is, when there are errors in the decoding result in decoding section 104, modulating section 108 modulates the bit sequence as shown in FIG.13 to generate data symbols #1 to #4 formed with systematic bits S₁' to S₈' and parity bits P₁'' to P₈'', and outputs the generated data symbols to radio transmitting section 109.

In this way, according to the present embodiment, when there are errors in a decoding result in decoding section 104, the parity bits after a hard decision are set in a relay transmission target, so that the base station can obtain diversity effect for parity bits as well even when there are errors in the decoding result in decoding section 104.

### (Embodiment 4)

Similar to the reliability of systematic bits which increases by iterative decoding in decoding section 104, the reliability of parity bits increases.

Then, the relay station in the present embodiment is the same as in Embodiment 1 in transmitting the data symbols included in the systematic bits to the base station when there are errors in the decoding result formed with systematic bits after error correcting decoding and is different from Embodiment 1 in including parity bits acquired upon error correcting decoding.

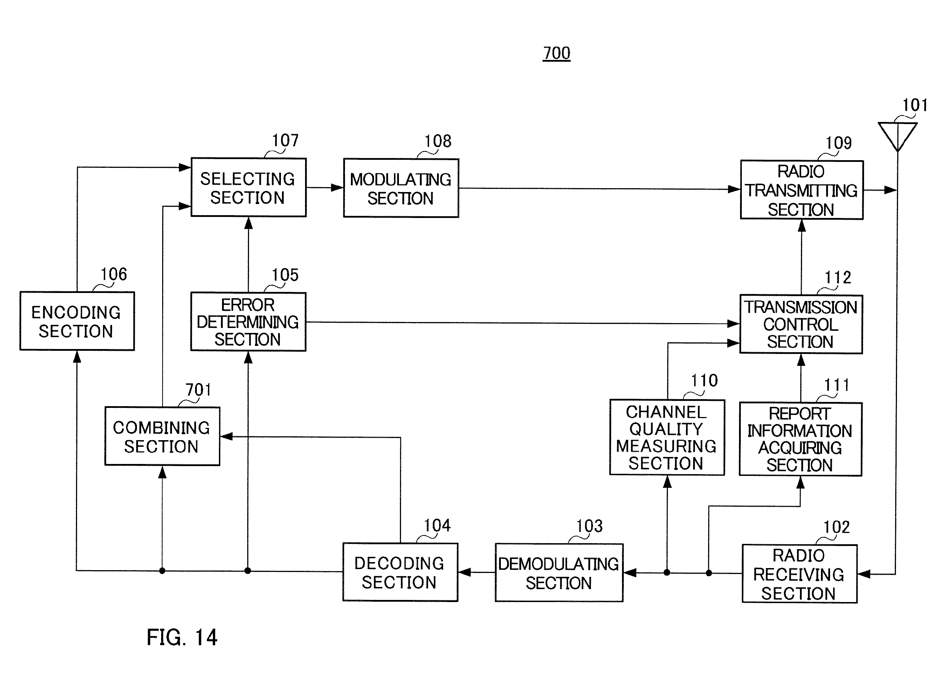

FIG.14 shows the configuration of relay station 700 according to the present embodiment. In FIG.14, the same components as Embodiment 1 (FIG.2) will be assigned the same reference numerals and description thereof will be omitted.

The decoding result (FIG.4) acquired in decoding section 104 is inputted to error determining section 105, encoding section 106 and combining section 701. Moreover, decoding section 104 outputs parity bits P₁'' to P₈'' acquired in the final stage of iterative decoding to combining section 701.

Combining section 701 combines the bit sequences inputted from decoding section 104 as shown in FIG.13 and outputs the combined bit sequence to selecting section 107.

According to the determination result in error determining section 105, selecting section 107 selects either the bit sequence (FIG.13) inputted from combining section 701 or bit sequence (FIG. 5) inputted from encoding section 106 and outputs the selected bit sequence to modulating section 108.

The operations of selecting section 107 when there are no errors in the decoding result (FIG.4) in decoding section 104 will be the same as in Embodiment 1 and description thereof will be omitted.

On the other hand, when there are errors in the decoding result in decoding section 104, selecting section 107 selects the bit sequence (FIG.13) inputted from combining section 701 and outputs the selected bit sequence to modulating section 108. That is, when there are errors in the decoding result in decoding section 104, modulating section 108 modulates the bit sequence as shown in FIG.13 to generate data symbols #1 to #4 formed with systematic bits S₁' to S₈' and parity bits P₁'' to P₈'' and outputs the generated data symbols to radio transmitting section 109.

In this way, according to the present embodiment, when there are errors in a decoding result in decoding section 104, the parity bits acquired upon error correcting decoding are relayed and transmitted, so that the base station can obtain diversity effect for parity bits as well even when there are errors in the decoding result in decoding section 104.

With Embodiment 3 and the present embodiment, whether or not to transmit data symbols may be controlled using a plurality of thresholds. For example, two thresholds of threshold A and threshold B higher than threshold A are used, to control whether or not to transmit the data symbols formed with systematic bits S₁' to S₈' by threshold A and control whether or not to transmit the data symbols formed with parity bits P₁'' to P₈'' by threshold B. This is to transmit both systematic bits and parity bits because the error rate is low when channel quality is high, and transmit systematic bits alone having the error rate lower than parity bits because the error rate is high when channel quality is low.

### (Embodiment 5)

The relay station according to the present embodiment transmits a relay signal to the base station in response to a transmission request from the base station.

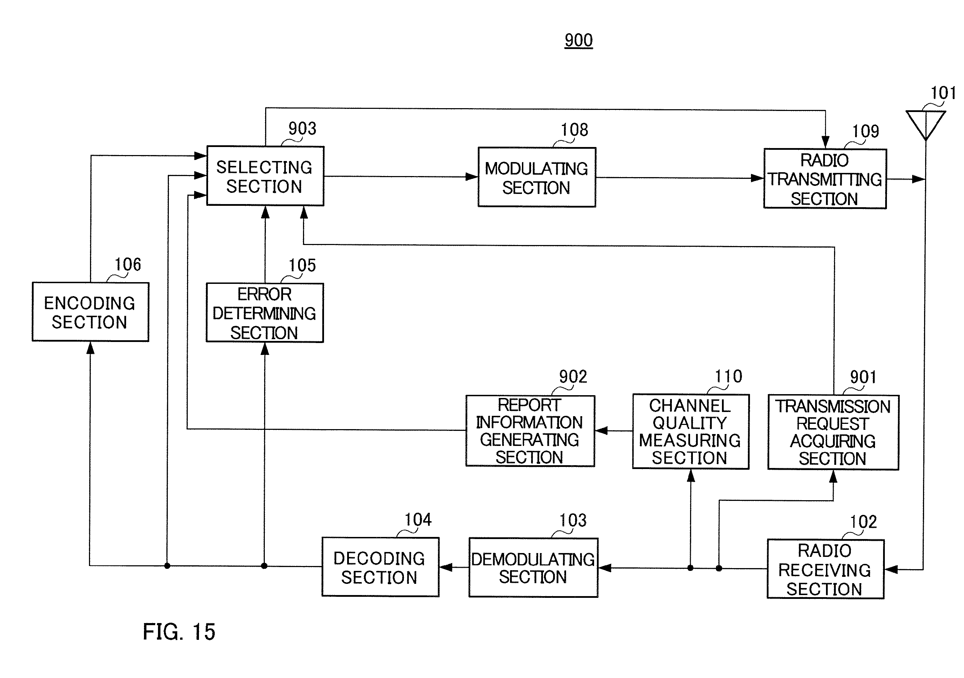

FIG.15 shows the configuration of relay station 900 according to the present embodiment. In FIG.15, the same components as Embodiment 1 (FIG.2) will be assigned the same reference numerals and description thereof will be omitted.

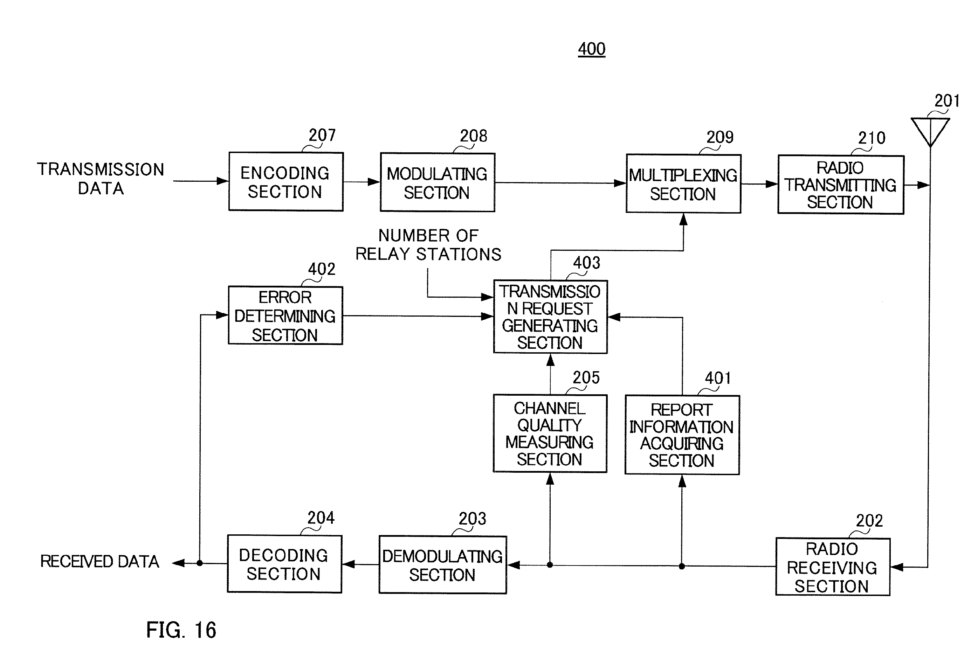

Radio receiving section 102 receives data symbols transmitted from the mobile station and the transmission request transmitted from base station 400 (described later) shown in FIG.16 via antenna 101, performs radio processing including down-conversion and outputs the data symbols and the transmission request after radio processing to demodulating section 103, channel quality measuring section 110 and transmission request acquiring section 901.

Transmission request acquiring section 901 acquires the transmission request from base station 400 and outputs it to selecting section 903. This transmission request is transmitted from base station 400 to relay station 900 when base station 400 request relay station 900 to transmit a relay signal.

The SNR of the received data symbols measured in channel quality measuring section 110 (that is, the channel quality between the mobile station and relay station 900) is inputted to report information generating section 902.

Report information generating section 902 generates report information formed with the SNR of the received data signals, and outputs the report information to selecting section 903.

According to the determination result in error determining section 105 and whether or not to request transmission, selecting section 903 selects among the decoding result (FIG.4) inputted from decoding section 104, the bit sequence (FIG.5) inputted from encoding section 106 and the report information, and outputs the selected result to modulating section 108.

When there are errors in the decoding result (FIG.4) in decoding section 104, and when the transmission request is received from base station 400, selecting section 903 selects the decoding result and outputs the decoding result to modulating section 108. That is, in this case, modulating section 108 modulates the decoding result to generate data symbols #1 and #2 formed with systematic bits S₁' to S₈' alone, and outputs the generated data symbols to radio transmitting section 109.

Moreover, when there are errors in the decoding result (FIG.4) in decoding section 104, selecting section 903 selects the report information regardless of whether or not a transmission request, and outputs the selected report information to radio transmitting section 109. That is, the report information is transmitted to base station 400 when there are errors in the decoding result.

Moreover, when there are no errors in the decoding result (FIG.4) in decoding section 104, selecting section 903 selects the bit sequence (FIG.5) inputted from encoding section 106 regardless of whether or not a transmission request and outputs the selected bit sequence to modulating section 108. Accordingly, in this case, modulating section 108 modulates the bit sequence to generate data symbols #1 to #4 formed with systematic bits S₁' to S₈' and parity bits P₁' to P₈' as shown in FIG.5 and outputs the data symbols to radio transmitting section 109.

Next, base station 400 according to the present embodiment will be explained. FIG.16 shows the configuration of base station 400. In FIG.16, the same components as Embodiment 1 (FIG.8) will be assigned the same reference numerals and description thereof will be omitted.

Radio receiving section 202 receives data symbols and report information transmitted from relay station 900 via antenna 201, performs radio processing including down-conversion and outputs the data symbols and the report information after radio processing to demodulating section 203, channel quality measuring section 205 and report information acquiring section 401.

Report information acquiring section 401 acquires the report information from relay station 900 and outputs the report information to transmission request generating section 403.

The average SNR found in channel quality measuring section 205 is inputted to transmission request generating section 403.

Moreover, received data acquired in decoding section 204 is inputted to error determining section 402.

Error determining section 402 determines whether or not there are errors in decoding result using CRC and outputs the determination result ("NG" when there are errors and "OK" when there are no errors) to transmission request generating section 403. Whether or not there are errors is usually determined on a per frame basis.

Transmission request generating section 403 generates a transmission request according to the SNR of the received data symbols in relay station 900, which are acquired from report information, and the determination result in error determining section 402.

Transmission request generating section 403 does not generate a transmission request regardless of the SNR of the received data symbols in relay station 900 when there are no errors in the received data.

On the other hand, when there are errors in the received data, transmission request generating section 403 compares the SNR of the received data symbol in relay station 900 and a threshold.

Then, if the SNR is equal to or more than the threshold, transmission request generating section 403 generates a transmission request and outputs it to multiplexing section 209.

On the other hand, if the SNR is less than the threshold, transmission request generating section 403 does not generate a transmission request.

The setting method of the threshold in transmission request generating section 403 will be the same as in transmission control section 112 (FIG.6) according to Embodiment 1 and the description thereof will be omitted.

Multiplexing section 209 time-multiplexes the data symbols and the transmission request and outputs the time-multiplexed signal to radio transmitting section 210.

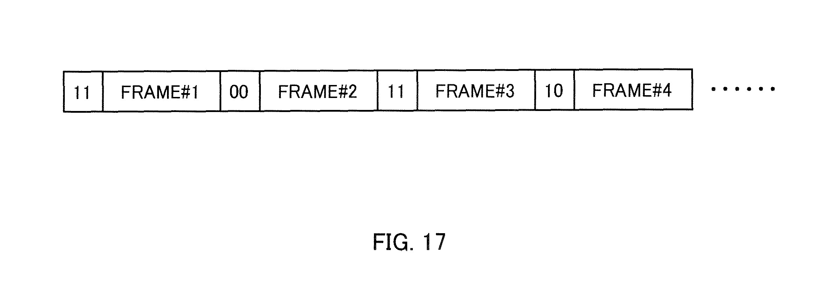

According to the present embodiment as in Embodiment 2, as shown in FIG. 17, relay station 900 assigns the flag "11" to the beginning of frames #1 and #3 formed with data symbols including systematic bits with errors, assigns the flag "00" to the beginning of frame #2 formed with data symbols not including systematic bits with errors, assigns the flag "10" to the beginning of frame #4 formed with report information to enable the base station to distinguish between data symbols including systematic bits with errors, the data symbols not including systematic bits with errors and the report information.

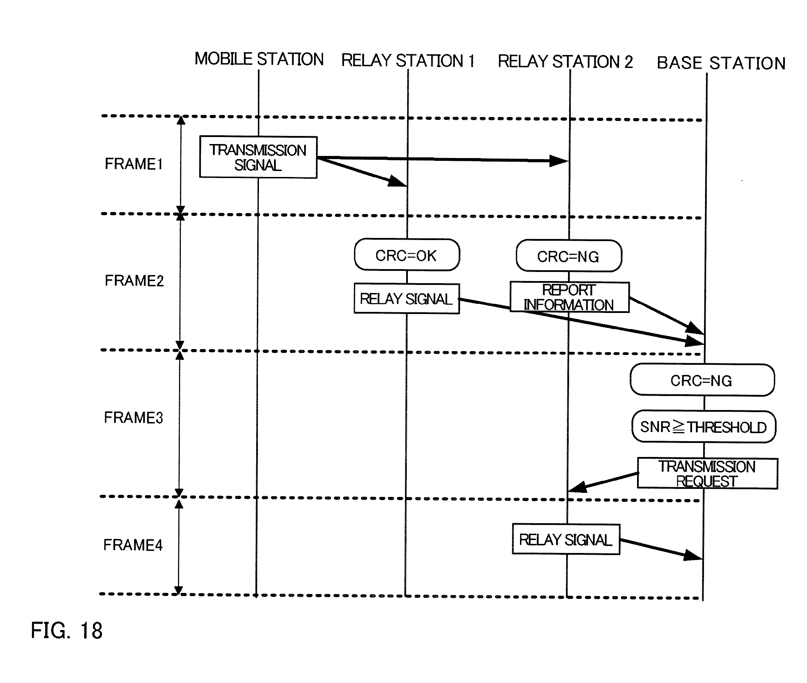

Next, FIG.18 shows a sequence diagram of the case where there are no errors in the decoding result in relay station 1 and there are errors in the decoding result in relay station 2. Relay station 1 and relay station 2 adopt the configuration shown in FIG.15, and the base station adopts the configuration shown in FIG.16.

In frame 1, the mobile station transmits the transmission signal for the base station to relay station 1 and relay station 2 simultaneously.

In frame 2, there are no errors in the decoding result (CRC = OK), so that relay station 1 transmits the relay signal shown in FIG.5 to the base station. Meanwhile, relay station 2 transmits the report information to the base station because there are errors in the decoding result (CRC = NG). Then, the base station receives the relay signal from relay station 1 and the report information from relay station 2.

In frame 3, the base station determines whether or not there are errors in the relay signal from relay station 1, and, if there are errors (CRC = NG), compares the SNR of the received signals in relay station 1 and the threshold. Then, the base station transmits the transmission request to relay station 2 because the SNR is equal to or more than the threshold.

In frame 4, relay station 2 transmits the relay signal shown in FIG.4 in response to the transmission request from the base station. Then, the base station receives the relay signal from relay station 2 and combines the groups of data symbols formed with the same systematic bits between the relay signal in relay station 1 and the relay signal in relay station 2.

In this way, according to the present embodiment, as in Embodiment 1, it is possible to prevent propagation of errors that is likely to occur when channel quality of received data symbols is low and obtain diversity effect in the base station.

Embodiments of the present invention have been explained.

With the embodiments above, the number of relay stations may be equal to or more than three.

Moreover, with the embodiments, additional relay stations may be placed between the relay station and the base station or between the mobile station and the relay station.

Moreover, the base station, the mobile station and the control station according to the embodiments may be referred to as "Node B, " "UE" and "RNC, " respectively. Furthermore, the relay station according to the embodiments is referred to as "repeater," "simple base station," "cluster head," and so on.

Moreover, althoughcaseshavebeen described with the embodiments above where the present invention is configured by hardware, the present invention may be implemented by software.

Each function block employed in the description of the aforementioned embodiment may typically be implemented as an LSI constituted by an integrated circuit. These may be individual chips or partially or totally contained on a single chip. "LSI" is adopted here but this may also be referred to as "IC, " "system LSI, " "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2006-051174, filed on February 27, 2006, including the specification, drawings and abstract, is incorporated herein by reference in its entirety.

### Industrial Applicability

The present invention is applicable to communication systems in which radio communication apparatuses such as mobile stations and base stations carry out radio transmission through relay stations, for example, multihop systems.

## Claims

1. A radio communication apparatus that performs relay transmission between a first radio communication apparatus and a second radio communication apparatus, the radio communication apparatus comprising:
a receiving section that receives a first data symbol formed with first systematic bits and first parity bits subjected to error correction coding, from the first radio communication apparatus;
a demodulating section that demodulates the first data symbol to acquire the first systematic bits and the first parity bits;
a decoding section that performs error correction decoding on the first systematic bits using the first parity bits to acquire a decoding result formed with the second systematic bits after the error correction decoding;
a determination section that determines whether or not there are errors in the decoding result;
a measuring section that measures a first channel quality of the first data symbol; and
a control section that controls whether or not to transmit a second data symbol including the second systematic bits according to the first channel quality when there are errors in the decoding result.

2. The radio communication apparatus according to claim 1, wherein the control section determines to transmit the second data symbol when the first channel quality is equal to or more than a threshold and determines not to transmit the second data symbol when the first channel quality is lower than the threshold.

3. The radio communication apparatus according to claim 2, wherein the control section sets the threshold according to the number of radio communication apparatuses that perform relay transmission between the first radio communication apparatus and the second radio communication apparatus.

4. The radio communication apparatus according to claim 3, wherein the control section sets the threshold higher when the number of radio communication apparatuses increases.

5. The radio communication apparatus according to claim 2, wherein the control section sets a threshold according to a second channel quality between the second radio communication apparatus and the radio communication apparatus that performs relay transmission between the first radio communication apparatus and the second radio communication apparatus.

6. The radio communication apparatus according to claim 5, wherein the control section sets the threshold higher when the second channel quality increases.

7. The radio communication apparatus according to claim 5, wherein the control section sets the threshold according to an average of the second channel quality.

8. The radio communication apparatus according to claim 2, wherein the control section sets a threshold according to a sum of channel quality between the second radio communication apparatus and other radio communication apparatuses that perform relay transmission between the first radio communication apparatus and the second radio communication apparatus.

9. The radio communication apparatus according to claim 8, wherein the control section sets the threshold higher when the sum value increases.

10. The radio communication apparatus according to claim 1, further comprising a coding section that performs error correction coding on the decoding result to acquire third systematic bits and second parity bits subjected to the error correction coding,
wherein the control section determines to transmit the second data symbol formed with the third systematic bits and the second parity bits regardless of the first channel quality when there is no error in the decoding result.

11. The radio communication apparatus according to claim 1, further comprising an assigning section that assigns to the second data symbol information showing whether or not the second data symbol includes the second systematic bits with errors.

12. A relay transmission method in a radio communication apparatus that performs relay transmission between a first radio communication apparatus and a second radio communication apparatus, the relay transmission method comprising:
a receiving step of receiving a first data symbol formed with first systematic bits and first parity bits subjected to error correction coding, from the first radio communication apparatus;
a demodulating step of demodulating the first data symbol to acquire the first systematic bits and the first parity bits;
a decoding step of performing error correction decoding on the first systematic bits using the first parity bits to acquire a decoding result formed with the second systematic bits after the error correction decoding;
an error determination step of determining whether or not there are errors in the decoding result;
a measuring step of measuring a first channel quality of the first data symbol; and
a controlling step of controlling whether or not to transmit a second data symbol including the second systematic bits according to the channel quality when there are errors in the decoding result.
